# EUROPÄISCHE PATENTSCHRIFT

(11) **EP 2 010 798 B1**
(45) Veröffentlichungstag und Bekanntmachung des Hinweises auf die Patenterteilung: **03.03.2010**
(21) Anmeldenummer: 07728345.5
(22) Anmeldetag: 20.04.2007
(51) Int. Cl.: F16F 13/20, F16F 13/14

(54) **LUFTGEDÄMPFTE LAGERBUCHSE**
AIR-DAMPED BEARING BUSH
COUSSINET À AMORTISSEMENT PNEUMATIQUE

(30) Priorität: 21.04.2006 DE 102006018621
(43) Veröffentlichungstag der Anmeldung: 07.01.2009
(73) Patentinhaber: Trelleborg Automotive Germany GmbH, 56203 Höhr-Grenzhausen (DE)
(72) Erfinder: GRAEVE, Arndt, 56072 Koblenz (DE); EISEL, Eric, 56242 Ellenhausen (DE)
(74) Vertreter: Preissner, Nicolaus
(86) Internationale Anmeldenummer: PCT/EP2007/053886
(87) Internationale Veröffentlichungsnummer: WO 2007/122192

(56) Entgegenhaltungen:
- WO-A-03/058092
- DE-A1- 19 952 638
- DE-A1-102004 008 401
- GB-A- 2 086 530
- JP-A- 61 157 849

## Beschreibung

Die Erfindung betrifft eine Lagerbuchse mit einem inneren Lagerteil, das durch einen Federkörper aus einem elastomeren Material abgestützt ist, der an einem äußeren Lagergehäuse oder einer karosserieseitigen Aufnahme gelagert ist.

Derartige Lagerbuchsen werden insbesondere bei Kraftfahrzeug-Fahrwerken oder auch bei Pendelstützen zur Aggregatelagerung eingesetzt. Hierbei sind konventionelle Gummi-Metall-Buchsen bekannt, bei denen zwischen dem inneren Lagerteil und einem äußeren Lagergehäuse ein Federkörper aus einem elastomeren Material einvulkanisiert ist. Darüber hinaus sind auch hydraulisch dämpfende Lagerbuchsen bekannt, bei denen zwei flüssigkeitsgefüllte Arbeitskammern über einen Dämpfungskanal miteinander verbunden sind. Derartige hydraulisch dämpfende Buchsen zeichnen sich durch gute Dämpfung aus, die allerdings in derselben Raumrichtung mit schlechter akustischer Isolation einhergeht. Der Einsatz von hydraulischen Komponenten ist mit entsprechend höheren Bauteilkosten und höherem Entwicklungsaufwand verbunden. Eine weitere oft genutzte Möglichkeit ist der Einsatz hoch dämpfender Gummimischungen. Derartige Mischungen sind jedoch hinsichtlich ihrer dynamischen Eigenschaften in allen Raumrichtungen schlechte Isolatoren.

Aus den Dokumenten DE 19 859 067 A bzw. JP 61 157 849 A sind Lagerbuchsen gemäß der Oberbegriffe der Ansprüche 1 bzw. 2 bekannt.

Ausgehend hiervon liegt der Erfindung die **Aufgabe** zugrunde, eine Lagerbuchse vorzuschlagen, die bei geringen Bauteilkosten eine hohe Dämpfungswirkung aufweist.

Zur **Lösung** dieser Aufgabe wird eine Lagerbuchse mit den Merkmalen der nebengeordneten Patentansprüche 1 und 2 vorgeschlagen.

Bei der erfindungsgemäßen Lagerbuchse begrenzt der Federkörper mindestens zwei luftgefüllte Arbeitskammern, die über mindestens einen Dämpfungskanal miteinander verbunden sind oder jeweils über eine Überströmbohrung mit der Umgebung verbunden sind. Hierbei sind die Arbeitskammern flach ausgebildet und weisen einen geringen linearen Freiweg auf, wobei ein Verhältnis von Pumpdurchmesser zum linearen Freiweg von 15 bis 80 vorliegt.

Im Sinne der vorliegenden Anmeldung wird unter dem Begriff Pumpdurchmesser ein pneumatischer Kennwert verstanden. Der Pumpdurchmesser entspricht dem hydraulischen Durchmesser bei hydraulischen Komponenten. Durch eine Verschiebung des Kerns um einen Freiweg X ein Volumen V an Luft aus der jeweiligen Arbeitskammer verdrängt. Wird das verdrängte Volumen V durch den für diese Verdrängung erforderlichen linearen Freiweg X dividiert, ergibt sich bei der vorliegenden Erfindung eine Wirkfläche. Je nach Ausgestaltung der Lagerbuchse kann diese Wirkfläche verschiedene Formen haben, beispielsweise rechteckig oder rund. Transformiert man den Flächeninhalt der Wirkfläche in eine (fiktive) Kreisfläche ergibt sich daraus der hier definierte Pumpdurchmesser. Das Verhältnis von Pumpdurchmesser zu linearem Freiweg ist somit dimensionslos.

Die Dämpfungswirkung der erfindungsgemäßen Lagerbuchse wird dadurch erreicht, dass die Luft zwischen den beiden Arbeitskammern oder in die Umgebung verdrängt wird. Zum Erreichen einer möglichst großen Dämpfungsarbeit (Phasenwinkel) weist die erfindungsgemäße Lagerbuchse einen großen Pumpdurchmesser (Wirkfläche) sowie einen kleinen linearen Freiweg auf. Hierdurch wird im Bereich des linearen Freiwegs die Arbeitskammer nahezu vollständig komprimiert. Der weitere Progressionsverlauf wird außerhalb der Arbeitskammer eingestellt. Da das Arbeitsmedium Luft ist, das sowohl in den Arbeitskammern als auch in der Umgebung vorliegt, sind die Anforderungen an die Dichtigkeit im Vergleich zu hydraulischen Lagerbuchsen wesentlich geringer. Insgesamt wird durch die erfindungsgemäße Lagerbuchse eine Dämpfungswirkung erreicht, die höher und spezieller abgestimmt werden kann als bei konventionellen Lagerbuchsen mit hoch dämpfenden Mischungen. Darüber hinaus zeichnet sich die erfindungsgemäße Lagerbuchse durch relativ geringe Herstellungskosten aus.

Vorteilhafte Ausgestaltungen der Erfindung ergeben sich aus den abhängigen Ansprüchen.

Vorteilhaft weisen die Arbeitskammern ein Verhältnis von Pumpdurchmesser zu linearem Freiweg von 20 bis 40 auf.

Der Durchmesser des Dämpfungskanals liegt vorteilhaft bei 0, 5 mm bis 1 mm, vorzugsweise bei 1 mm.

Bei einer vorteilhaften Ausführungsform ist der Federkörper an dem inneren Lagerteil anvulkanisiert.

Bei einer anderen vorteilhaften Ausführungsform ist ein auf den Federkörper aufgeschobener Clips vorgesehen, der den Federkörper im Bereich der Arbeitskammer vorspannt .Hierdurch wird die Lebensdauer der Lagerbuchse erhöht.

Nachfolgend wird die Erfindung an Hand von Ausführungsbeispielen näher beschrieben, die in schematischer Weise in der Zeichnung dargestellt sind. Hierin zeigen:
- Fig. 1: einen Vertikalschnitt durch eine erste Ausführungsform einer erfindungsgemäßen Lagerbuchse;
- Fig. 2: den Schnitt längs der Linie II-II in Fig. 1;
- Fig. 3: den Schnitt III-III in Fig. 1,
- Fig. 4: einen Längsschnitt durch eine zweite erfindungsgemäße La- gerbuchse; und
- Fig. 5: einen Vertikalschnitt durch eine dritte erfindungsgemäße Aus- führungsform.

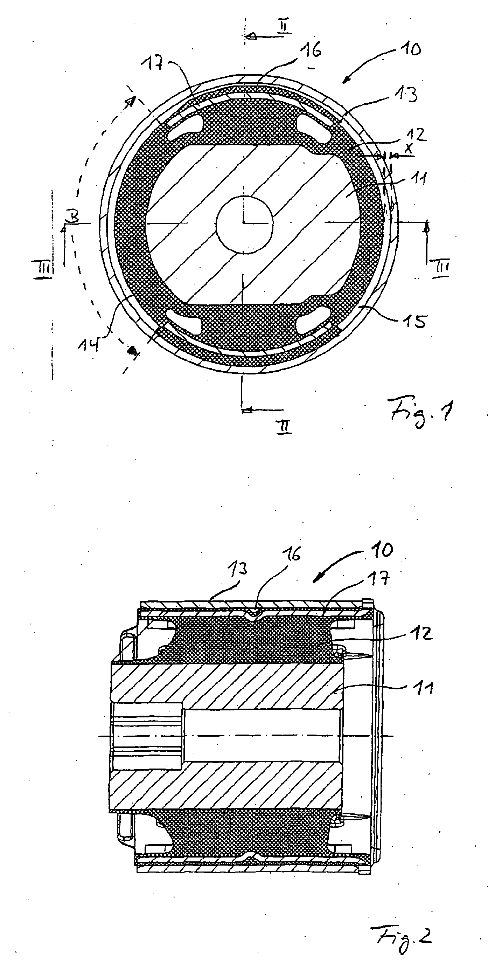

In den Fig. 1 bis 3 ist in unterschiedlichen Ansichten eine Lagerbuchse 10 dargestellt, die ein inneres Lagerteil 11 aufweist, das aus Metall hergestellt ist. Das innere Lagerteil 11 wird durch einen Federkörper 12 aus elastomerem Material abgestützt, der in einem äußeren Lagergehäuse 13 aufgenommen ist. Es kann jedoch auch vorgesehen sein, dass die Lagerbuchse 10 direkt in eine karosserieseitige Aufnahme eingepresst wird, die dann als äußeres Lagergehäuse fungiert.

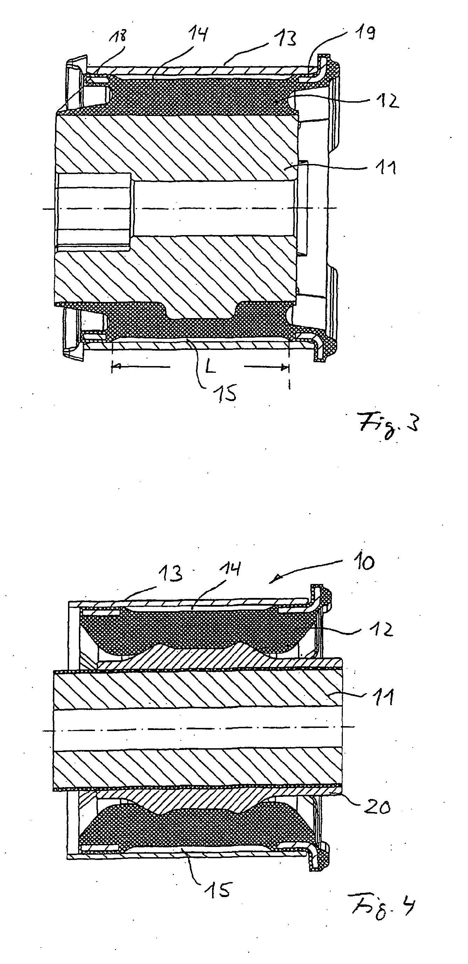

Der Federkörper 12 begrenzt mit dem äußeren Lagergehäuse 13 zwei Arbeitskammern 14, 15, die jeweils mit Luft gefüllt sind und über einen Dämpfungskanal 16 miteinander verbunden sind. Wie aus den Figuren ersichtlich ist, weisen die Arbeitskammern 14, 15 einen relativ großen Pumpdurchmesser auf. Weiterhin zeichnet sich die Arbeitskammern 14, 15 durch einen geringen linearen Freiweg X in radialer Richtung aus. Wie bereits oben erläutert, ergibt sich der Pumpdurchmesser über die so genannte Wirkfläche oder Pumpfläche, die über das verdrängte Volumen der Arbeitskammer und den linearen Freiweg X ermittelt wird. Der ermittelte Wert für die Wirkfläche wird als fiktive Kreisfläche angesetzt und aus dieser Kreisfläche der Pumpdurchmesser ermittelt. Die Wirkfläche ergibt sich im vorliegenden Ausführungsbeispiel an Hand der in Fig. 1 gezeigten Breite B und der in Fig. 3 gezeigten Länge L der Arbeitskammer 14, 15. Bei dem dargestellten Ausführungsbeispiel liegt das Verhältnis von Pumpdurchmesser zu linearen Freiweg X bei ca. 25.

Wie insbesondere aus Fig. 2 ersichtlich ist, ist der Federkörper 12 in einen Käfig 17 einvulkanisiert. Weiterhin ist aus dieser Figur ersichtlich, dass der Dämpfungskanal 16, der etwa in der Mitte der Buchse angeordnet ist, nur einen sehr geringen Durchmesser von ca. 1 mm aufweist.

Fig. 3 verdeutlicht, dass sich die Arbeitskammern 14, 15 im Wesentlichen über die gesamte Breite des Federkörpers 12 erstrecken. Die Abdichtung der Arbeitskammern 14, 15 erfolgt über am Federkörper 12 vorgesehener Dichtflächen 18, 19, die mit dem Gehäuse 13 zusammenwirken. Die Dichtfläche 18, 19 kann relativ klein gehalten werden, da sowohl in den Arbeitskammern 14,15 als auch in der Umgebung Luft vorliegt.

Fig. 4 zeigt ein weiteres Ausführungsbeispiel einer erfindungsgemäßen Lagerbuchse 10, zu deren Beschreibung die bereits eingeführten Bezugszeichen für gleiche oder funktionsgleiche Teile verwendet werden. Die dargestellte Lagerbuchse 10 weist ebenfalls ein inneres Lagerteil 11 auf, das über einen Federkörper 12 an einem äußeren Lagergehäuse 13 gelagert ist. Zur Vorspannung des Federkörpers 12 im Bereich der Arbeitskammern 14,15 ist ein Clips 20 vorgesehen, der auf das innere Lagerteil 11 aufgeschoben ist. Hierdurch wird die Lebensdauer der Lagerbuchse 10 erhöht.

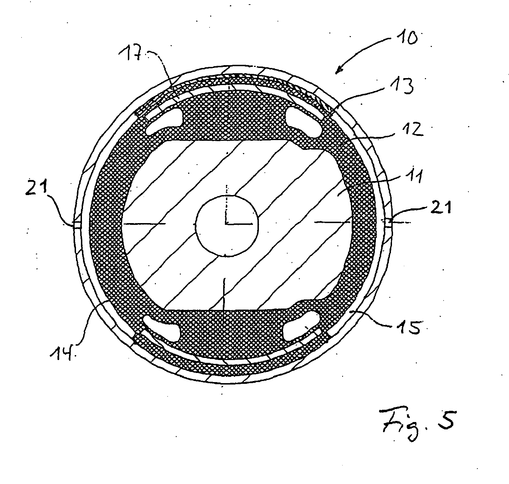

Fig. 5 zeigt ein anderes Ausführungsbeispiel einer erfindungsgemäßen Lagerbuchse 10, zu deren Beschreibung die bereits eingeführten Bezugszeichen für gleiche oder funktionsgleiche Teile verwendet werden. Die Lagerbuchse 10 weist zwei Arbeitskammern 14, 15 auf, die nicht miteinander durch einen Dämpfungskanal 16 verbunden sind. Jede Arbeitskammer 14,15 weist eine in das Lagergehäuse 13 eingebrachte Überströmbohrung 21 auf, die eine Verbindung zur Umgebung herstellt.

Die Lagerbuchsen 10, die insbesondere bei Kraftfahrzeug-Fahrwerken zum Einsatz kommen, zeichnen sich durch eine Luftdämpfung auf. Hierbei wird die in den Arbeitskammern 14, 15 vorliegende Luft zwischen den beiden Kammern 14, 15 verdrängt. Durch den großen Pumpdurchmesser bei kleinem linearem Freiweg X wird eine große Dämpfungsarbeit erzielt. Die Arbeitskammern 14, 15 werden im Betrieb bei maximaler Last nahezu vollständig komprimiert. Der Progressionsverlauf wird außerhalb der Arbeitskammern 14, 15 eingestellt. Auf diese Weise wird eine hohe Dämpfungswirkung erreicht, die sehr gezielt abgestimmt werden kann.

### Bezugszeichenliste

- 10: Lagerbuchse
- 11: inneres Lagerteil
- 12: Federkörper
- 13: Lagergehäuse, karosserie- seitige Aufnahme
- 14: Arbeitskammer
- 15: Arbeitskammer
- 16: Dämpfungskanal
- 17: Käfig
- 18: Dichtfläche
- 19: Dichtfläche
- 20: Clips
- 21: Überströmbohrung

- B: Breite
- L: Länge
- X: linearer Freiweg

## Patentansprüche

1. Lagerbuchse (10) mit einem inneren Lagerteil (11), das durch einen Federkörper (12) aus einem elastomeren Material abgestützt ist, der an einem äußeren Lagergehäuse (13) gelagert ist, wobei der Federkörper (12) und das äußere Lagergehäuse (13) mindestens zwei luftgefüllte Arbeitskammern (14, 15) begrenzen, die über mindestens einen Dämpfungskanal (16) miteinander verbunden sind, **dadurch gekennzeichnet, dass** die Arbeitskammern (14, 15) flach ausgebildet sind und einen geringen linearen Freiweg (X) aufweisen, und wobei ein Verhältnis von Pumpdurchmesser zu linearem Freiweg von 15 bis 80 vorliegt.

2. Lagerbuchse (10) mit einem inneren Lagerteil (11), das durch einen Federkörper (12) aus einem elastomeren Material abgestützt ist, der an einem äußeren Lagergehäuse (13) gelagert ist, wobei der Federkörper (12) und das äußere Lagergehäuse (13) mindestens zwei luftgefüllte Arbeitskammern (14, 15) begrenzen, die jeweils über eine Überströmbohrung (21) mit der Umgebung verbunden sind, **dadurch gekennzeichnet, dass** die Arbeitskammern (14, 15) flach ausgebildet sind und einen geringen linearen Freiweg (X) aufweisen, und wobei ein Verhältnis von Pumpdurchmesser zu linearem Freiweg von 15 bis 80 vorliegt.

3. Lagerbuchse (10) nach Anspruch 1 oder 2, **dadurch gekennzeichnet, dass** die Arbeitskammern (14, 15) ein Verhältnis von Pumpdurchmesser zu linearem Freiweg von 20 bis 40 aufweisen.

4. Lagerbuchse (10) nach Anspruch 1**, dadurch gekennzeichnet, dass** der Durchmesser des Dämpfungskanals (16) bei 0,5 mm bis 1,5 mm, vorzugsweise 1 mm, liegt.

5. Lagerbuchse (10) nach einem der Ansprüche 1 bis 3, **dadurch gekennzeichnet, dass** der Federkörper (12) an dem inneren Lagerteil (11) anvulkanisiert ist.

6. Lagerbuchse (10) nach einem der Ansprüche 1 bis 3, **dadurch gekennzeichnet, dass** der Federkörper (12) mittels eines auf das innere Lagerteil (11) aufgeschobenen Clips (20) vorgespannt ist.

7. Lagerbuchse (10) nach einem der vorhergehenden Ansprüche, **dadurch gekennzeichnet, dass** die Lagerbuchse (10) direkt in eine karosserieseitige Aufnahme als äußeres Lagergehäuse (13) eingepresst ist.

## Claims

1. A mounting bush (10), comprising an inner mounting part (11) supported by a spring body (12) of an elastomeric material that is mounted on an outer mounting housing (13), wherein the spring body (12) and the outer mounting housing (13) define at least two air-filled working chambers (14, 15), which are connected to each other by at least one damping channel (16), **characterized in that** the working chambers (14, 15) have a flat configuration and have a small linear clearance (X), and wherein a ratio of a pump diameter to the linear clearance is between 15 and 80.

2. A mounting bush (10), comprising an inner mounting part (11) supported by a spring body (12) of an elastomeric material that is mounted on an outer mounting housing (13), wherein the spring body (12) and the outer mounting housing (13) define at least two air-filled working chambers (14, 15), which are each connected with the ambient by a vent bore (21), **characterized in that** the working chambers (14, 15) have a flat configuration and have a small linear clearance (X), and wherein a ratio of a pump diameter to the linear clearance is between 15 and 80.

3. The mounting bush (10) according to claim 1 or 2, **characterized in that** the working chambers (14, 15) have a ratio of the pump diameter to the linear clearance between 20 and 40.

4. The mounting bush (10) according to claim 1, **characterized in that** the diameter of the damping channel (16) is 0.5 mm to 1.5 mm, preferably 1 mm.

5. The mounting bush (10) according to any one of claims 1 to 3, **characterized in that** the spring body (12) is cured onto the inner mounting part (11).

6. The mounting bush (10) according to any one of claims 1 to 3, **characterized in that** the spring body (12) is biased by means of a clip (20) pushed onto the inner mounting part (11).

7. The mounting bush (10) according to any one of the preceding claims, **characterized in that** the mounting bush (10) is directly pressed into a body-side socket as an outer mounting housing (13).

## Revendications

1. Coussinet (10) comprenant une partie de coussinet intérieure (11), qui est soutenue par un corps élastique (12) en matériau élastomère, lequel est monté dans un boîtier de coussinet extérieur (13), dans lequel le corps élastique (12) et le boîtier de coussinet extérieur (13) délimitent au moins deux chambres de travail (14, 15) remplies d'air, qui sont reliées l'une à l'autre via au moins un canal d'amortissement (16), **caractérisé en ce que** les chambres de travail (14, 15) sont réalisées de façon plane et présentent un trajet libre linéaire faible (X), et dans lequel le rapport du diamètre de pompage sur le trajet libre linéaire est de 15 à 80.

2. Coussinet (10) comprenant une partie de coussinet intérieure (11), qui est soutenue par un corps élastique (12) en matériau élastomère, lequel est monté dans un boîtier de coussinet extérieur (13), dans lequel le corps élastique (12) et le boîtier de coussinet extérieur (13) délimitent au moins deux chambres de travail (14, 15) remplies d'air, qui sont reliées chacune à l'environnement via un perçage de déversement (21),
**caractérisé en ce que** les chambres de travail (14, 15) sont réalisées de façon plane et présentent un trajet libre linéaire faible (X), et dans lequel le rapport du diamètre de pompage sur le trajet libre linéaire est de 15 à 80.

3. Coussinet (10) selon la revendication 1 ou 2, **caractérisé en ce que** les chambres de travail (14, 15) présentent un rapport du diamètre de pompage sur le trajet libre linéaire de 20 à 40.

4. Coussinet (10) selon la revendication 1, **caractérisé en ce que** le diamètre du canal d'amortissement (16) est de l'ordre de 0,5 mm à 1,5 mm, de préférence 1 mm.

5. Coussinet (10) selon l'une des revendications 1 à 3, **caractérisé en ce que** le corps élastique (12) est appliqué par vulcanisation sur la partie de coussinet intérieure (11).

6. Coussinet (10) selon l'une des revendications 1 à 3, **caractérisé en ce que** le corps élastique (12) est précontraint au moyen d'une pince enfilée (20) sur la partie de coussinet intérieure (11).

7. Coussinet (10) selon l'une des revendications précédentes, **caractérisé en ce que** le coussinet (10) est monté à la presse directement dans un logement du côté de la carrosserie à titre de boîtier de coussinet extérieur (13).
